# EUROPEAN PATENT APPLICATION

(11) **EP 2 945 390 A1**
(43) Date of publication of application: **18.11.2015**
(21) Application number: 15162671.0
(22) Date of filing: 07.04.2015
(51) Int. Cl.: H04N 21/414, G06F 3/14, G06K 9/32

(54) **METHOD AND DEVICE FOR THE TRANSMISSION OF SCREENSHOTS**

(30) Priority: 14.05.2014 CN 201410203570
(71) Applicant: Xiaomi Inc., Beijing 100085 (CN)
(72) Inventor: Wang, Wei, 100085 Beijing (CN); Sun, Peng, 100085 Beijing (CN); Zhao, Quanguo, 100085 Beijing (CN)
(74) Representative: Sackin, Robert

(57) **Abstract**

A method and device for image transmission are provided for improving the transmission mode and the display effect of images. The method includes: receiving an IP connection request sent from a computer (401); acquiring an IP address of the computer according to the IP connection request received (402); acquiring screenshots and direction information related to the screenshots; and sending the screenshots and the direction information to the computer by means of IP Layer according to the IP address received (403). The device includes: a receiving module (1201), an IP module (1202), an acquisition module (1203) and a sending module (1204). The embodiment may transmit screenshots by means of IP Layer, not restricted by hardware of a transport layer, and applicable to both USB and wireless communication. In addition to screenshots, the embodiment also transmits direction information related to screenshots so that a receiving end may display better screenshots according to direction information, thus improving the display effect.

## Description

### TECHNICAL FIELD

The present disclosure generally relates to the field of computer processing, and more particularly, to a method and a device for image transmission.

### BACKGROUND

With the development of electronic technology, more and more terminal equipment provides people with various services, for example, entertainment services, information search services and interactive services, etc. Terminal equipment includes a mobile phone, a computer and a TV set, etc. In related technologies, connection and communication between a mobile phone and a computer, between a mobile phone and a TV set, and between a computer and a TV set are available.

It is found out that, in related technologies, phone pictures may be displayed either in the landscape mode or in the vertical mode because a mobile phone has built-in screen autorotation function. The same picture has different display scales in the landscape mode and the vertical mode. Therefore, phone pictures transmitted to a computer have unsatisfactory display effect on the computer. This problem needs to be solved urgently.

### SUMMARY

In order to overcome problems in related technologies, the present disclosure provides a method and a device for image transmission.

According to the first aspect of the embodiment in the present disclosure, there is provided an image transmission method, including:
receiving an IP connection request sent from a computer;
acquiring an IP address of the computer according to the IP connection request received;
acquiring screenshots and direction information related to the screenshots; and
sending the screenshots and the direction information to the computer by means of IP Layer according to the IP address received.

The acquiring direction information related to screenshots comprises:
reading the direction information from a locally preset storage location for storing direction information related to screenshots; or
determining the direction information related to the screenshots according to a length-width ratio of the screenshots; or
determining the direction information related to the screenshots according to direction information determined by a local direction sensor.

The method also includes: compressing the screenshots and acquiring the screenshots compressed.

The sending the screenshots and the direction information to the computer by means of the IP Layer comprises: sending the screenshots compressed and the direction information to the computer by means of the IP Layer.

The IP connection request is a Real-time Transport Streaming Protocol (RTSP) session connection request based on IP Layer, and the RTSP session connection request includes a UDP port number for transmission of the screenshots.

The sending the screenshots and the direction information to the computer by means of the IP Layer according to the IP address received comprises: sending the screenshots and the direction information to the computer with the IP address and the UDP port number by means of the RTSP session of the IP Layer.

According to the second aspect of the embodiment of the present disclosure, there is provided an image transmission method, including:
sending an IP connection request to a mobile terminal according to an IP address of a mobile terminal stored locally;
receiving both screenshots and direction information related to the screenshots sent from the mobile terminal by means of IP Layer; and
displaying the screenshots according to the direction information.

The displaying the screenshots according to the direction information comprises: controlling a scale and a size of a window for displaying the screenshots according to the direction information, and displaying the screenshots in the window.

The IP connection request is an RTSP session connection request based on IP Layer, and the RTSP session connection request includes a UDP port number for transmission of the screenshots.

The receiving both the screenshots and the direction information related to the screenshots sent from the mobile terminal by means of the IP Layer comprises: receiving both the screenshots and the direction information related to the screenshots sent from the mobile terminal on the UDP port number by means of the RTSP session of the IP Layer.

According to the third aspect of the embodiments of the present disclosure, there is provided an image transmission device, including:
a receiving module, configured to receive an IP connection request sent from a computer;
an IP module, configured to acquire an IP address of the computer according to the IP connection request received;
an acquisition module, configured to acquire screenshots and direction information related to the screenshots; and
a sending module, configured to send the screenshots and the direction information to the computer by means of IP Layer according to the IP address received.

The acquisition module includes:
a reading module, configured to the direction information from a locally preset storage location for storing direction information related to screenshots; or
a scale module, configured to determine the direction information related to the screenshots according to a length-width ratio of the screenshots; or
a sensor module, configured to determine the direction information related to the screenshots according to direction information determined by a local direction sensor.

The device also includes: a compression module, configured to compress the screenshots and acquiring the screenshots compressed; and
the sending module sends the screenshots compressed and the direction information to the computer by means of IP Layer.

The IP connection request is a Real-time Transport Streaming Protocol (RTSP) session connection request based on IP Layer, and the RTSP session connection request includes a UDP port number for transmission of screenshots; and
the sending module sends, by means of the RTSP session of the IP Layer, the screenshots and the direction information to the computer with the IP address and UDP port number.

According to the fourth aspect of the embodiments of the present disclosure, there is provided an image transmission device, including:
a sending module, configured to send an IP connection request to a mobile terminal according to an IP address of a mobile terminal stored locally;
a receiving module, configured to receive both screenshots and direction information related to the screenshots sent from the mobile terminal by means of IP Layer; and
a display module, configured to display the screenshots according to the direction information.

The display module controls the scale and size of a window for displaying the screenshots according to the direction information, and displays the screenshots by the window.

The IP connection request is an RTSP session connection request based on IP Layer, the RTSP session connection request includes a UDP port number for transmission of the screenshots; and

The receiving module receives both the screenshots and the direction information related to screenshots sent from the mobile terminal on the UDP port number by means of the RTSP session of IP Layer.

According to the fifth aspect of the embodiments of the disclosure, an image transmission device is provided, including:
a processor;
a memory configured to store instruction executable by the processor;
wherein, the processor is configured to perform:
receiving an IP connection request sent from a computer;
acquiring an IP address of the computer according to the IP connection request received;
acquiring screenshots and direction information related to the screenshots; and
sending the screenshots and the direction information to the computer by means of IP Layer according to the IP address received.

According to the sixth aspect of the embodiments of the present disclosure, an image transmission device is provided, including:
a processor;
a memory configured to store instruction executable by the processor;
wherein, the processor is configured to perform:
sending an IP connection request to a mobile terminal according to an IP address of a mobile terminal stored locally;
receiving both screenshots and direction information related to the screenshots sent from the mobile terminal by means of IP Layer; and
displaying the screenshots according to the direction information.

The technical solution according to embodiments of the disclosure may have the following beneficial effects:

The embodiment may transmit screenshots by means of IP Layer, not restricted by hardware of a physical layer, and applicable to both USB and wireless communication. Besides, the IP address of the mobile terminal is stored in the computer, capable of sending an IP connection request to the mobile terminal without addressing, and the mobile terminal may acquire the IP address of the computer at one stroke (or at one shot) by receiving IP connection request, thus simplifying IP connection process. In addition, in the embodiment, in addition to screenshots, the mobile terminal also transmits direction information related to the screenshots so that a receiving end may display better screenshots according to direction information, thus improving the display effect.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram of displaying screenshots according to an exemplary embodiment.
Fig. 2 is a schematic diagram of displaying screenshots according to an exemplary embodiment.
Fig. 3 is a schematic diagram of displaying screenshots according to an exemplary embodiment.
Fig. 4 is a flow chart showing an image transmission method according to an exemplary embodiment.
Fig. 5 is a schematic diagram showing a direction of a mobile terminal according to an exemplary embodiment.
Fig. 6 is a schematic diagram showing a direction of a mobile terminal according to an exemplary embodiment.
Fig. 7 is a flow chart showing a connection process method according to an exemplary embodiment.
Fig. 8 is a flow chart showing an image transmission method according to an exemplary embodiment.
Fig. 9 is a block diagram of an image transmission device according to an exemplary embodiment.
Fig. 10 is a schematic diagram of displaying screenshots according to an exemplary embodiment.
Fig. 11 is a block diagram of an image transmission device according to an exemplary embodiment.
Fig. 12 is a block diagram of an image transmission device according to an exemplary embodiment.
Fig. 13 is a block diagram of an acquisition module according to an exemplary embodiment.
Fig. 14 is a block diagram of an image transmission device according to an exemplary embodiment.
Fig. 15 is a block diagram of an image transmission device according to an exemplary embodiment.
Fig. 16 is a block diagram of an image transmission device according to an exemplary embodiment.
Fig. 17 is a block diagram of a device according to an exemplary embodiment.
Fig. 18 is a block diagram of a device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

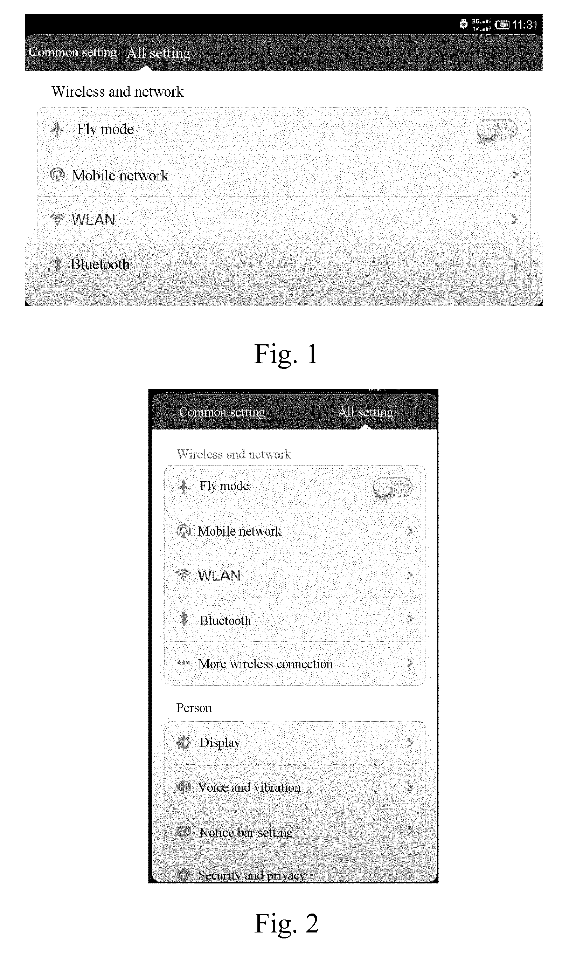

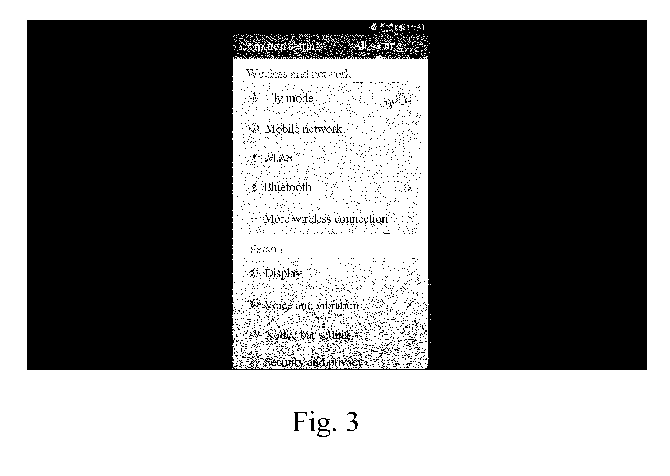

The screen display mode is subject to automatic adjustment by the mobile terminal on the basis of its own direction, for example, landscape mode or vertical mode. For example, screenshots displayed by the mobile terminal in landscape mode is as shown in Fig.1, and screenshots displayed in vertical mode is as shown in Fig.2. It may be known from Fig.1 and Fig.2 that, the length-width ratio of screenshots is different in landscape mode and vertical mode. However, the display window of a majority of computers has a display scale of 16:9. When screenshots as shown in Fig.1 and Fig.2 is received by the computer and displayed in a display window with a display scale of 16:9, the display effect of the screenshots in landscape mode is basically the same as shown in Fig.1, and the display effect of the screenshots in vertical mode is as shown in Fig.3. It may be known from Fig.3 that, the screenshots are obviously zoomed out, with a poor resolution. The screenshots need zooming in for a clear display. In the embodiments of the present disclosure, in addition to screenshots, the mobile terminal also transmits direction information related to screenshots, thus increasing the amount of transmitted information and providing reference information for display by the computer end. The computer may adaptively display screenshots according to the direction information, thus improving the display effect.

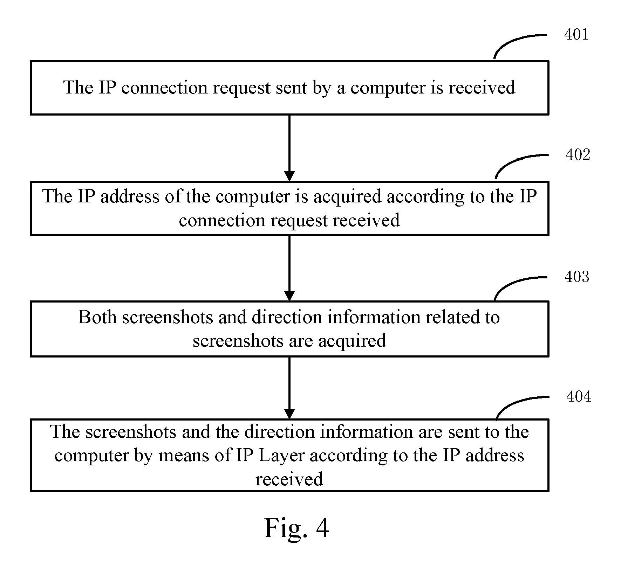

Fig. 4 is a flow chart showing an image transmission method according to an exemplary embodiment. As shown in Fig.4, the method may be performed by the mobile terminal, including following steps.

In Step 401, the Internet Protocol (IP) connection request sent from a computer is received;

In Step 402, the IP address of the computer is acquired according to the IP connection request received;

In Step 403, both screenshots and direction information related to screenshots are acquired;

In Step 401, both the screenshots and the direction information are sent to the computer by means of the IP connection in an IP Layer according to the IP address received.

In the embodiment, in addition to screenshots, the mobile terminal also acquires and transmits direction information related to screenshots. The object is to provide direction information to a computer at the opposite end so that the computer may display better screenshots according to the direction information and thus solving the problem that poor display effect of pictures is caused by landscape mode or vertical mode of the mobile terminal. Besides, the mobile terminal may acquire the IP address of the computer at one stroke by receiving IP connection request so as to realize subsequent transmission of screenshots, thus simplifying IP connection process and improving the efficiency.

The mobile terminal may be connected to a computer by means of a USB (Universal Serial Bus), or through wireless connection including WiFi (Wireless Fidelity) connection, Bluetooth connection and NFC (Near Field Communication) connection, etc. In related technologies, information transmission between the mobile terminal and the computer is realized by the aforementioned connections. However, all the aforementioned connections pertain to physical layer connection, having poor compatibility. The embodiment employs IP Layer Communication via an IP connection so that various connection modes are applicable to transmission of screenshots. This is because transmission of screenshots by means of IP Layer may be compatible with various physical connection modes

The mobile terminal in the embodiment may be an electronic equipment that may automatically rotate screen, for example, a mobile phone or a tablet computer and the like. The computer may be an electronic equipment that may not automatically rotate screen, for example, a laptop, a desktop computer or an all-in-one desk computer and the like.
In Step 403, there are many implementations for acquiring direction information related to screenshots, for example, implementations A1-A3.

Implementation A1: the mobile terminal may mark the current screen direction by using special status identification and store the status identification in a storage location preset. In the embodiment, the status identification may serve as direction information related to screenshots. Therefore it is possible to read direction information from a locally preset storage location for storing direction information related to screenshots.

Implementation A2: as shown in Fig.1, the length-width ratio of screenshots in landscape mode is 16:9, the length being greater than the width. As shown in Fig.2, the length-width ratio of screenshots in vertical mode is 9:16, the length being smaller than the width. Therefore, screenshots may be determined as screenshots in landscape mode if the length is greater than the width; and screenshots may be determined as screenshots in vertical mode if the length is smaller than the width. Therefore, direction information related to screenshots may be determined according to the length-width ratio of the screenshots.

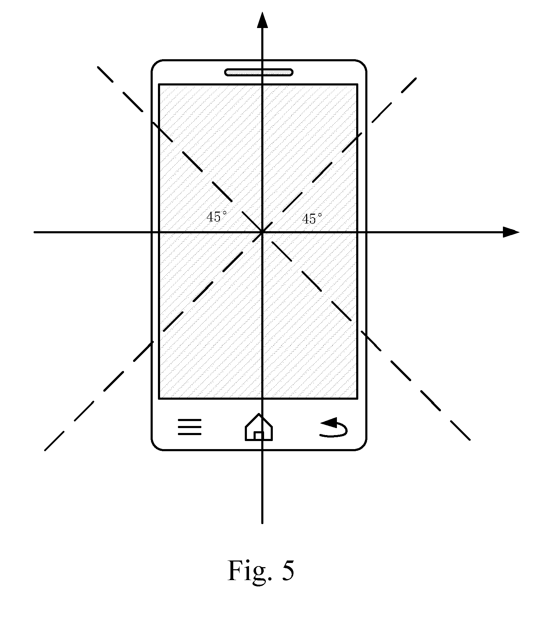

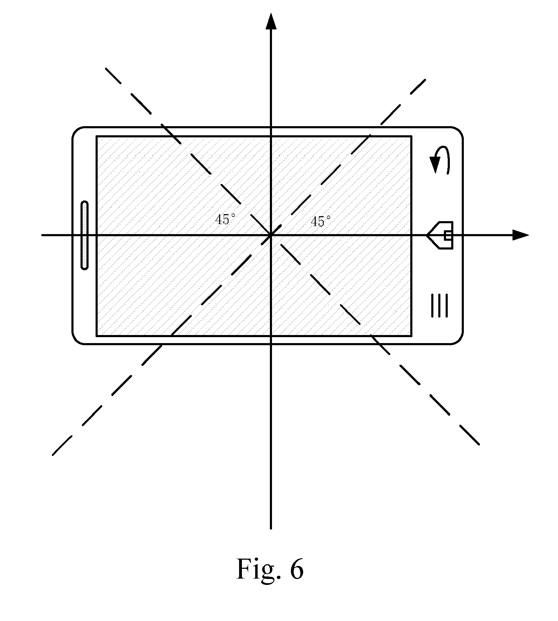

Implementation A3: the mobile terminal may detect autorotation by means of a local direction sensor and automatically rotates the screen. Therefore, the mobile terminal may orient the current direction by means of the local direction sensor and determine a landscape mode or a vertical mode according to the direction information from the direction sensor. Therefore, direction information related to screenshots may be determined according to direction information determined by the local direction sensor. For example, refer to Fig.5 and Fig.6. The landscape mode is employed if the direction of the mobile terminal is at [0, 45], [125, 225] or [315, 360], and the direction information related to screenshots is determined as direction information signifying landscape mode; the vertical mode is employed if the direction of the mobile terminal is at (45, 125) or (225, 315), and the direction information related to screenshots is determined as direction information signifying vertical mode.

Direction information in the embodiment includes direction information signifying landscape mode and direction information signifying vertical mode, and may have many patterns of manifestation. For example, "0" is configured to signify direction information of landscape mode, while "1" is configured to signify direction information of vertical mode.

In Step 403, the process of acquiring screenshots may have different implementations on the basis of different application scenarios, for example, implementation B1 and implementation B2.

At Implementation B1, it is performed screen capturing and acquiring screenshots while receiving screenshots and transmission instructions. Thereafter it is sent the screenshots acquired. This implementation may be applicable to acquiring and transmitting one-off screenshots.

At Implementation B2: it is performed screen capturing to the local interface and acquiring screenshots, the screenshots acquired are stored into a framebuffer and the screenshots are acquired from the framebuffer. This implementation may be applicable to real-time dual screen synchronization. After receiving a synchronous command, screen capture is continuously conducted; the screenshots acquired are immediately stored into the framebuffer; then the screenshots are read out of the framebuffer and sent, thus mitigating the problem of asynchronism of screen capturing and screenshots sending. The screenshots should be deleted from the framebuffer once being sent out so as to continue storing new screenshots.

The screenshots are compressed for improving the transmission efficiency and it is the screenshots compressed to be acquired. The screenshots compressed and the direction information are sent to the computer by means of an IP (Internet Protocol) connection in the form of an IP Layer.

In Step 401, the process of establishing IP connection is simplified by means of receiving IP connection request (equivalent to establishing IP connection) by the mobile terminal. For the convenience of transmission of screenshots, the embodiment may employ Session Protocol for transmission. Therefore, the IP connection is an RTSP (Real Time Streaming Protocol) session connection, and the RTSP session connection request includes a UDP port number for transmission of the screenshots. An introduction of RTSP session connection process is made in detail hereinafter.

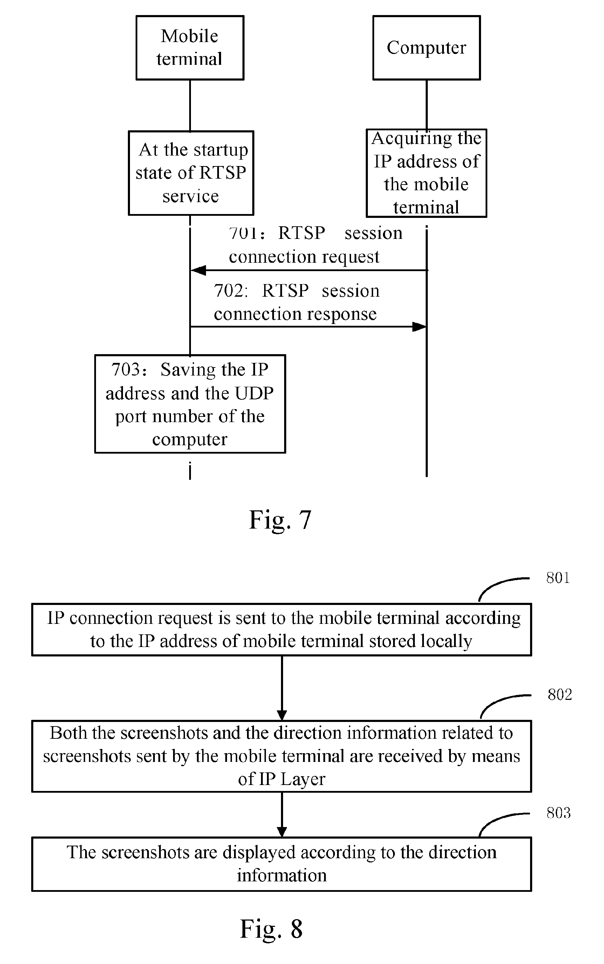

The mobile terminal is at the startup state of RTSP service. Take computer initiation connection as an example, referring to Fig.7. The computer acquires in advance the IP address of the mobile terminal, for example, the IP address of the mobile terminal may be acquired by way of USB connection and WiFi scanning, etc.

In Step 701, the computer sends RTSP session connection request to the mobile terminal according to IP address of the mobile terminal, wherein the RTSP session connection request includes the IP address and the UDP port number of the computer, and the UDP port number is used for transmitting the screenshots.

In Step 702, the mobile terminal sends RTSP session connection response to the computer. Parameter negotiation is made with the computer by means of RTSP session connection response, which is equivalent to merging response process with parameter negotiation process, thus further simplifying the connection process.

In Step 703, the mobile terminal saves the IP address and the UDP port number of the computer for the convenience of follow-up transmission of screenshots.

After having the connection process as shown in Fig.7, in Step 404, the screenshots and the direction information are sent to the computer with the IP address and the UDP port number by means of the RTSP session of the IP Layer.

Network may be disconnected after a connection between the mobile terminal and the computer is established. Network disconnection may have the following two cases. Case 1: abnormal disconnection, resulted from mobile terminal fault or computer fault, etc. Case 2: normal disconnection; for example, the mobile terminal sends disconnection message or halt message (or stop message) to the computer, and the computer will disconnect the network after receiving the disconnection message or halt message.

The process of transmission of screenshots is introduced hereinabove from the perspective of the mobile terminal, with the receiving end of screenshots being the computer. A process of transmission of screenshots is introduced hereinafter from the perspective of the computer.

Fig. 8 is a flow chart showing an image transmission method according to an exemplary embodiment. As shown in Fig.8, the method may be performed by the computer, including following steps.

In Step 801, IP connection request is sent to the mobile terminal according to the IP address stored in the local mobile terminal.

In Step 802, both the screenshots and the direction information related to screenshots sent from the mobile terminal are received by means of the IP connection via an IP Layer.

In Step 803, the screenshots are displayed according to the direction information.

In the embodiment, in addition to screenshots, the computer also receives direction information related to screenshots, thus increasing the amount of received information. The computer may display better screenshots according to the direction information received, thus improving the display effect. In addition, the computer receives screenshots and direction information by means of IP Layer, compatible with various physical connections, not restricted by physical connection types.

In Step 803, there are many implementations for displaying the screenshots according to the direction information, for example, implementations C1 and C2.

At Implementation C1: the display screen of a computer generally has a display scale of 16:9, accordingly the display window generally being 16:9. This type of display window is more suitable for displaying screenshots in landscape mode. Therefore, screenshots may be directly displayed if they are determined as ones in landscape mode according to direction information. Screenshots may be zoomed in according to the length of the display window if they are determined as ones in vertical mode according to direction information.

At Implementation C2: the computer controls the scale and size of a window for displaying the screenshots according to the direction information, and displays the screenshots through the window. In implementation C2, neither the scale nor the size of the display window is fixed, and adjustment of both is available according to screenshots. For example, the display window has a display scale of 16:9 if screenshots are determined as ones in landscape mode according to direction information, and the size of the display window may be adjusted according to the resolution of screenshots. The display window has a display scale of 9:16 if screenshots are determined as ones in vertical mode according to direction information, and the size of the display window may be adjusted according to the resolution of screenshots.

In Step 801, the IP address of the mobile terminal is stored in the computer. For example, the computer is installed with an application of "Mobile Phone Helper", through which the IP address of the mobile terminal may be acquired, no addressing process is required. The computer may directly send IP connection request to the mobile terminal according to the IP address stored. For the convenience of transmission of the screenshots, the IP connection request is an RTSP session connection request based on IP Layer, and the RTSP session connection request includes a UDP port number for transmission of the screenshots. The connection process is referred to the foregoing introduction, not elaborated herein. In Step 802, by way of the RTSP session of the IP Layer, both the screenshots and the direction information related to screenshots sent from the mobile terminal are received on the UDP port number.

It may be known from what is introduced hereinabove that, there may be multiple implementations in a plurality of links for transmission of screenshots, and these implementations will be referred to in detail hereinafter by a plurality of embodiments.

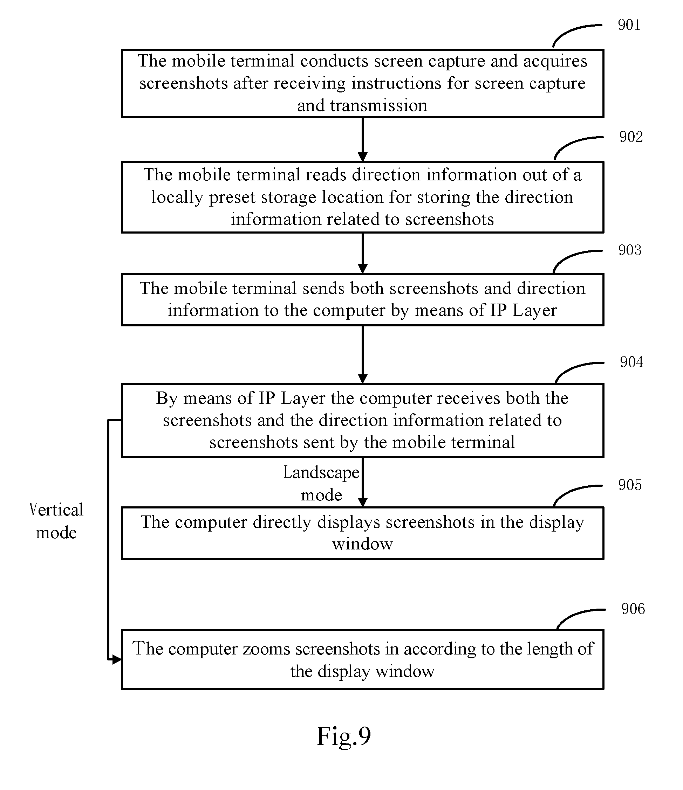

Fig. 9 is a flow chart showing an image transmission method according to an exemplary embodiment. As shown in Fig.9, the method includes following steps.

In Step 901, the mobile terminal conducts screen capture and acquires screenshots after receiving instructions for screen capture and transmission.

In Step 902, the mobile terminal reads direction information out of a locally preset storage location for storing the direction information related to screenshots.

In Step 903, the mobile terminal sends both screenshots and direction information to the computer by means of an IP connection via the IP Layer.

In Step 904, by means of IP Layer the computer receives both the screenshots and the direction information related to screenshots sent from the mobile terminal. Proceed to Step 905 if screenshots are determined as ones in landscape mode according to direction information; and proceed to Step 906 if screenshots are determined as ones in vertical mode according to direction information.

In Step 905, the computer directly displays screenshots in the display window.

In Step 906, the computer zooms screenshots in according to the length of the display window.

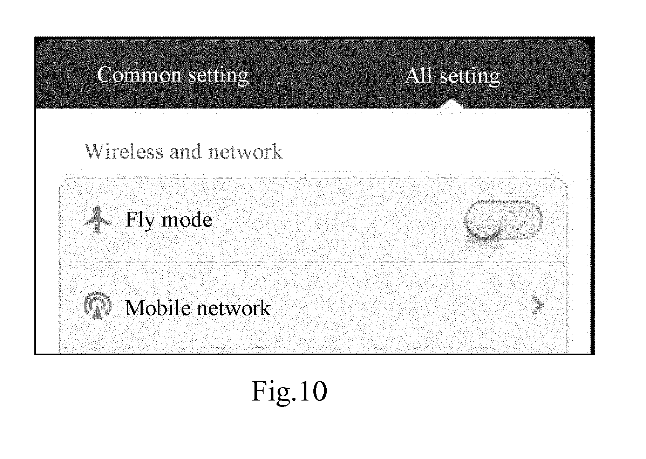

For example, screenshots transmitted by the mobile terminal are as shown in Fig.2, and screenshots zoomed in by the computer are as shown in Fig.10. Screenshots zoomed in are clearer.

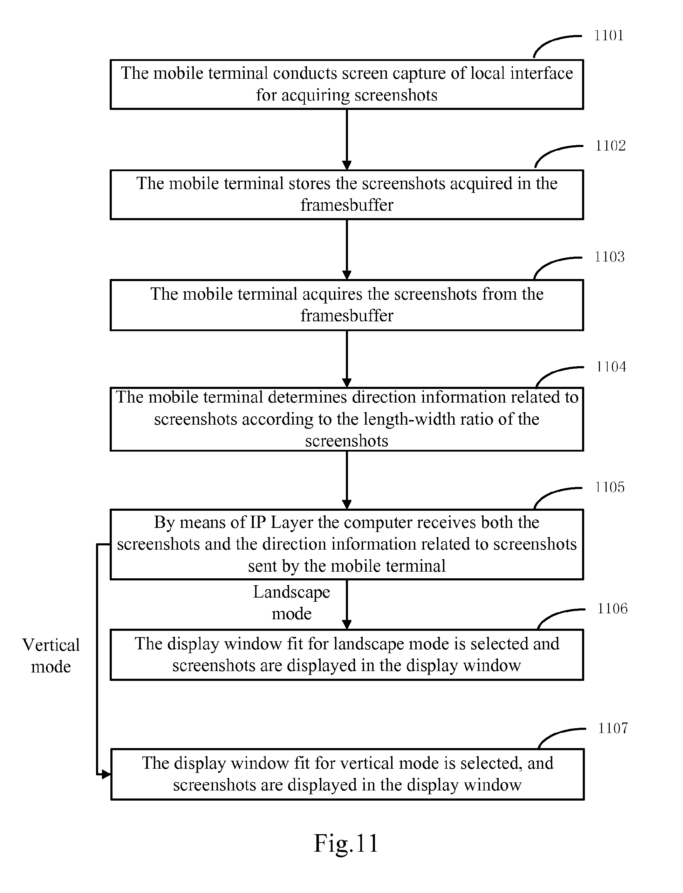

Fig. 11 is a flow chart showing an image transmission method according to an exemplary embodiment. As shown in Fig.11, including following steps.

In Step 1101, the mobile terminal conducts screen capture to the local interface for acquiring screenshots.

In Step 1102, the mobile terminal stores the screenshots acquired in the framebuffer.

In Step 1103, the mobile terminal acquires the screenshots from the framebuffer.

In Step 1104, the mobile terminal determines direction information related to screenshots according to the length-width ratio of the screenshots.

In Step 1105, by means of IP Layer the computer receives both the screenshots and the direction information related to screenshots sent from the mobile terminal. Proceed to Step 1105 if screenshots are determined as ones in landscape mode according to direction information; and proceed to Step 1106 if screenshots are determined as ones in vertical mode according to direction information.

In Step 1106, the display window fit for landscape mode is selected and screenshots are displayed in the display window. For example, a display window with a display scale of 16:9 is selected, and the size of the display window is adjusted according to the resolution of screenshots.

In Step 1107, the display window fit for vertical mode is selected, and screenshots are displayed in the display window. For example, a display window with a display scale of 9:16 is selected, and the size of the display window is adjusted according to the resolution of screenshots.

In the embodiment, the display scale of the display window may be adjusted to be fit for screenshots. The display effect of screenshots in screen capture of the mobile terminal is basically consistent with the display effect on a computer, with better display effect than that as shown in Fig.3.

The implementation of transmission of screenshots is referred to hereinabove, and the implementation is performed by the mobile terminal and the computer. The internal structure and function of the mobile terminal and the computer are introduced hereinafter.

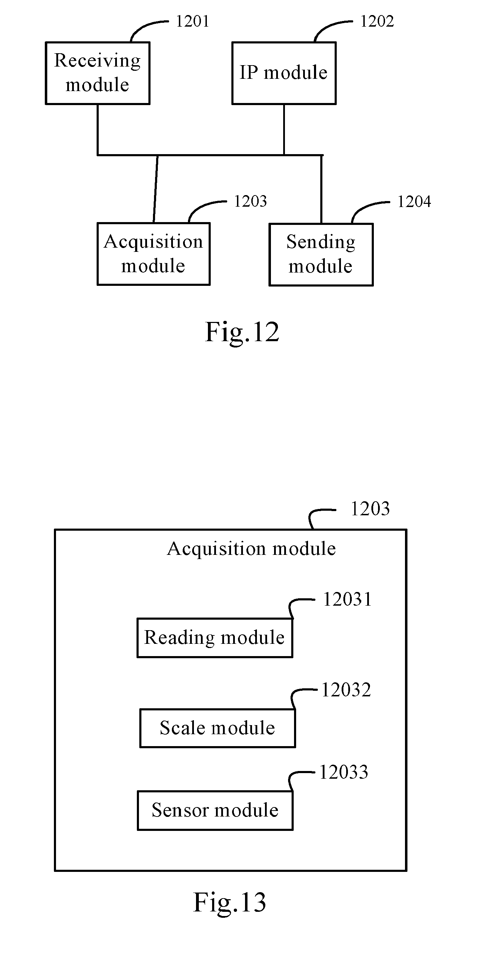

Fig. 12 is a schematic diagram of an image transmission device according to an exemplary embodiment. Referring to Fig.12, the device includes: a receiving module 1201, an IP module 1202, an acquisition module 1203 and a sending module 1204. For example, the device is a mobile terminal.

The receiving module 1201 is configured to receive IP connection request sent from a computer;

The IP module 1202 is configured to acquire the IP address of the computer according to the IP connection request received;

The acquisition module 1203 is configured to acquire screenshots and direction information related to screenshots;

The sending module 1204 is configured to send the screenshots and the direction information to the computer by means of the IP connection via an IP Layer.

Optionally, referring to Fig.13, the acquisition module 1203 includes: a reading module 12031, a scale module 12032 and a sensor module 12033.

The reading module 12031 is configured to read direction information from a locally preset storage location for storing direction information related to screenshots.

The scale module 12032 is configured to determine direction information related to screenshots according to the length-width ratio of the screenshots.

The sensor module 12033 is configured to determine direction information related to screenshots according to direction information determined by a local direction sensor.

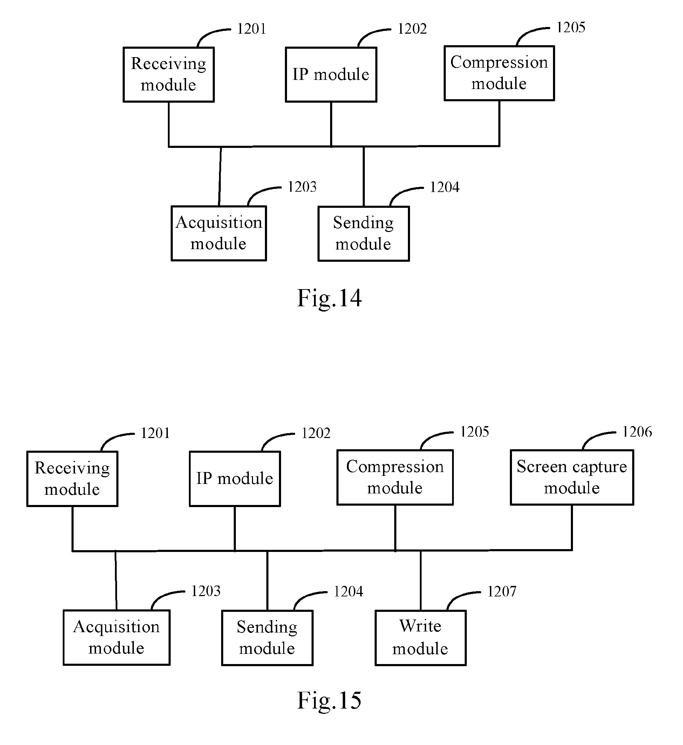

Optionally, referring to Fig.14, the device also includes: a compression module 1205, configured to compress the screenshots and acquire the screenshots compressed. The sending module 1204 sends the screenshots compressed and the direction information to the computer by means of IP Layer.

Optionally, the IP connection request is a Real-time Transport Streaming Protocol (RTSP) session connection request based on IP Layer, and the RTSP session connection request includes a UDP port number for transmission of the screenshots. The sending module 1204 sends the screenshots and the direction information to the computer with the IP address and the UDP port number by means of the RTSP session of the IP Layer.

Optionally, referring to Fig.15, the device also includes: a screen capture module 1206 and a write module 1207. The screen capture module 1206 is configured to conduct screen capture of local interface for acquiring screenshots. The write module 1207 is configured to store the screenshots acquired in the framebuffer. The acquisition module 1203 acquires the screenshots from the framebuffer.

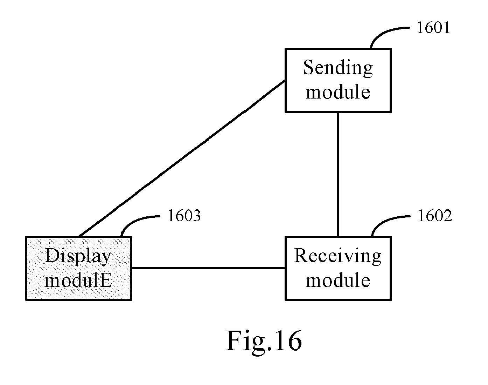

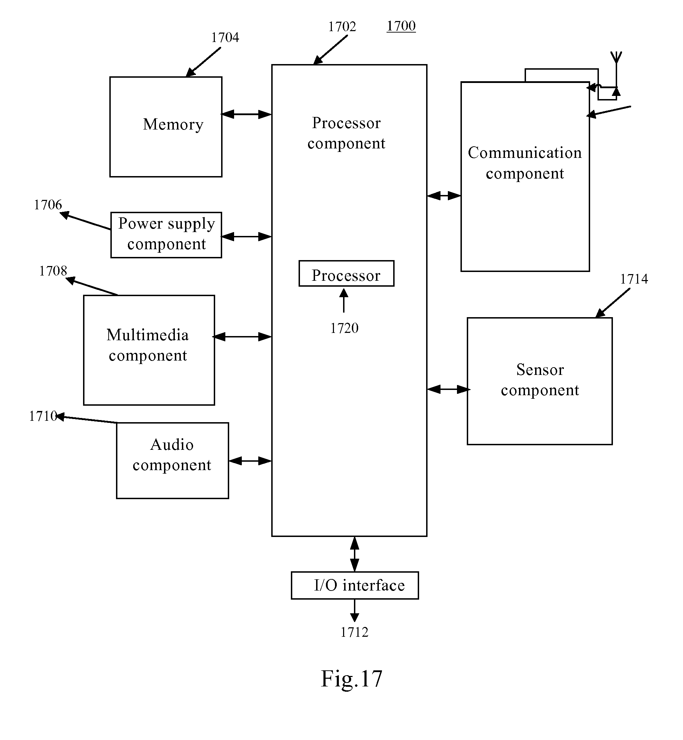

Fig. 16 is a schematic diagram of an image transmission device according to an exemplary embodiment. Referring to Fig.17, the device includes: a sending module 1601, a receiving module 1602 and a display module 1603. For example, the device is a computer.

The sending module 1601 is configured to send IP connection request to the mobile terminal according to an IP address of a mobile terminal stored locally.

The receiving module 1602 is configured to receive both screenshots and direction information related to the screenshots sent from the mobile terminal by means of IP Layer.

The display module 1603 is configured to display the screenshots according to the direction information.

Optionally, the display module 1603 controls the scale and the size of a window for displaying the screenshots according to the direction information, and displays the screenshots by the window.

Optionally, the IP connection request is a Real-time Transport Streaming Protocol (RTSP) session connection request based on IP Layer, and the RTSP session connection request includes a UDP port number for transmission of the screenshots.

The sending module sends the screenshots and the direction information to the computer with the IP address and the UDP port number by means of the RTSP session of the IP Layer.

With regard to the device in the above embodiment, detailed description of specific modes for executing operation of modules has been made in the embodiment of the method, no detailed illustration will be made herein.

Fig. 17 is a block diagram of an image transmission device 1700 according to an exemplary embodiment. For example, the device 1700 may be a mobile telephone, a computer, a digital broadcasting terminal, a message transceiver device, a games console, a tablet device, a medical device, a fitness facility, a PDA (personal digital assistant) and the like.

Referring to Fig.17, the device 1700 may include one or a plurality of components as below: a processor component 1702, a memory 1704, a power supply component 1706, a multimedia component 1708, an audio component 1710, an input/output (I/O) interface 1712, a sensor component 1714 and a communication component 1716.

The processor component 1702 usually controls the overall operation of the device 1700, for example, display, telephone call, data communication, and operation associated with camera operation and record operation. The processor component 1702 may include one or a plurality of processors 1720 for executing instructions so as to complete steps of above method in part or in whole. In addition, the processor component 1702 may include one or a plurality of modules for the convenience of interaction between the processor component 1702 and other components. For example, the processor component 1702 may include a multimedia module for the convenience of interaction between the multimedia component 1708 and the processor component 1702.

The memory 1704 is configured to store data of different types so as to support the operation of the device 1700. Examples of the data include any application program or approach directive for operation of the device 1700, including contact data, phonebook data, message, picture and video, etc. The memory 1704 may be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 1706 provides power for components of the device 1700. The power supply component 1706 may include a power management system, one or a plurality of power supplies, and other components associated with power generation, management and distribution of the device 1700.

The multimedia component 1708 includes a screen between the device 1700 and a user and for providing an output interface. In some embodiments, the screen may include an LCD (Liquid Crystal Display) and a touch panel (TP). If the screen includes a touch panel, the screen may be realized as a touch screen for receiving input signal from users. The touch panel includes one or a plurality of touch sensors for sensing gestures on the touch panel, for example, touching and sliding, etc. The touch sensor not only may sensor trip boundary of touching or sliding, but also may detect the duration and pressure related to the touching or sliding operation. In some embodiments, the multimedia component 1708 includes a front-facing camera and/or a rear-facing camera. When the device 1700 is under an operation mode, for example, capture mode or video mode, the front-facing camera and/or the rear-facing camera may receive external multimedia data. Each front-facing camera and rear-facing camera may be a fixed optical lens system or have focal length and optical zoom capacity.

The audio component 1710 is configured to output and/or input audio signal. For example, the audio component 1710 includes a microphone (MIC); when the device 1700 is under an operation mode such as call mode, record mode and speech recognition mode, the microphone is configured to receive external audio signal. The audio signal received may be further stored in the memory 1704 or sent out by the communication component 1716. In some embodiments, the audio component 1710 also includes a loudspeaker for outputting audio signal.

The I/O interface 1712 provides interface for the processor component 1702 and peripheral interface components, the peripheral interface components may be a keyboard, a click wheel and buttons, etc. These buttons may include but not limited to: home page button, volume button, start button and locking button.

The sensor component 1714 includes one or a plurality of sensors for providing the device 1700 with state evaluation from all aspects. For example, the sensor component 1714 may detect the on/off state of the device 1700, relative positioning of components, for example, the components are the display and keypad of the device 1700; the sensor component 1714 also may detect the position change of the device 1700 or a component thereof, the presence or absence of users' touch on the device 1700, the direction or acceleration/deceleration of the device 1700, and temperature variation of the device 1700. The sensor component 1714 may also include a proximity detector, which is configured to detect the presence of nearby objects in case of no physical touch. The sensor component 1714 may also include an optical sensor, for example, CMOS or CCD image sensor for imaging. In some embodiments, the sensor component 1714 may also include an acceleration sensor, a gyro sensor, a magnetic sensor, a pressure sensor, or a temperature sensor.

The communication component 1716 is configured for the convenience of wired communication or wired communication between the device 1700 and other equipment. The device 1700 is available for access to wireless network based on communication standards, for example, WiFi, 2G or 3G, or combination thereof. In an exemplary embodiment, the communication component 1716 receives by means of a broadcast channel the broadcast signal or broadcast-related information from external broadcast management systems. In an exemplary embodiment, the communication component 1716 also includes a near field communication (NFC) component for promoting short-range communication. For example, the NFC component may be realized on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, the device 1700 may be realized by one or a plurality of application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components, configured to execute the above methods.

In exemplary embodiments, a non-transitory computer-readable storage medium including instructions is also provided, for example, a memory 1704 including instructions, above instructions may be executed by the processors 1720 of the device 1700 so as to achieve the above methods. For example, the non-transitory computer-readable storage medium may be ROM, random access memory (RAM), CD-ROM, magnetic tape, floppy disk and optical data storage device, etc.

An image transmission device is provided, including:
a processor;
a memory configured to store instruction executable by the processor;
wherein, the processor is configured to:
receive IP connection request sent from a computer;
acquire the IP address of the computer according to the IP connection request received;
acquire screenshots and direction information related to screenshots; and
send the screenshots and the direction information to the computer by means of IP Layer according to the IP address received.

The processor is configured to:
acquire direction information related to screenshots includes:
read direction information from a locally preset storage location for storing direction information related to screenshots; or
determine direction information related to screenshots according to a length-width ratio of the screenshots; or
determine direction information related to screenshots according to direction information determined by a local direction sensor.
The processor also may be configured to:

The method also includes: to compress the screenshots and acquire the screenshots compressed;

The send the screenshots and the direction information to the computer by means of IP Layer, including: send the screenshots compressed and the direction information to the computer by means of IP Layer.

The processor also may be configured to:
The IP connection request is a Real-time Transport Streaming Protocol (RTSP) session connection request based on IP Layer, and the RTSP session connection request includes a UDP port number for transmission of the screenshots;
The send the screenshots and the direction information to the computer by means of IP Layer according to the IP address received, including: to send the screenshots and the direction information to the computer with the IP address and the UDP port number by means of the RTSP session of the IP Layer.

A non-transitory computer-readable storage medium, wherein instructions in the storage medium are executed by the processor of the mobile terminal so that the mobile terminal may execute an image transmission method, and the method includes:
The IP connection request sent from a computer is received;
The IP address of the computer is acquired according to the IP connection request received;
The screenshots and direction information related to screenshots are acquired;
The screenshots and the direction information are sent to the computer by means of IP Layer according to the IP address received.

Instructions in the storage media may also include:
The acquiring direction information related to screenshots includes:
The direction information is read out of a locally preset storage location for storing direction information related to screenshots; or
The direction information related to screenshots is determined according to the length-width ratio of the screenshots; or
The direction information related to screenshots is determined according to direction information determined by a local direction sensor.

Instructions in the storage media may also include:
The method also include to compress the screenshots and acquire the screenshots compressed;
The sending the screenshots and the direction information to the computer by means of IP Layer includes: sending the screenshots compressed and the direction information to the computer by means of IP Layer.

Instructions in the storage media may also include:
The IP connection request is a Real-time Transport Streaming Protocol (RTSP) session connection request based on IP Layer, and the RTSP session connection request includes a UDP port number for transmission of the screenshots;
The sending the screenshots and the direction information to the computer by means of IP Layer according to the IP address received includes: sending the screenshots and the direction information to the computer with the IP address and the UDP port number by means of the RTSP session of the IP Layer.

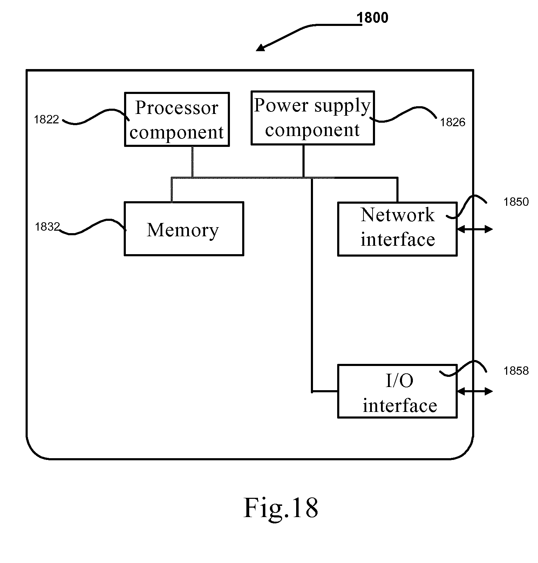

Fig. 18 is a block diagram of an image transmission device 1800 according to an exemplary embodiment. For example, the device 1800 may be provided with a computer. Referring to Fig. 18, the device 1800 includes a processor component 1822, and further includes one or a plurality of processors, and memory resource represented by the memory 1832 and configured to store instructions executable by the processor component 1822, for example, application program. The application program stored in the memory 1832 may include one or a plurality of components each of which is corresponding to a set of instructions. In addition, the processor component 1822 is configured to execute instructions so as to execute image transmission according to the foregoing method.

The device 1800 may also include a power supply component 1826 configured to execute the power management of the device 1800, a wired or wireless network interface 1850 configured to connect the device 1800 to the network, and an input/output (I/O) interface 1858. The device 1800 may operate an operating system based on and stored in the memory 1832, for example, Windows ServerTM, Mac OS XTM, UnixTM, LinuxTM, FreeBSDTM or other similar operating systems.

An image transmission device is provided, including:
a processor;
a memory configured to store instruction executable by the processor;
wherein, the processor is configured to:
send IP connection request to the mobile terminal according to the IP address stored in the local mobile terminal;
receive both the screenshots and the direction information related to screenshots sent from the mobile terminal by means of IP Layer;
and display the screenshots according to the direction information.

The processor also may be configured to:
display the screenshots according to the direction information, including: control the scale and the size of a window for displaying the screenshots according to the direction information, and display the screenshots by the window.

The processor also may be configured to:
The IP connection request is an RTSP session connection request based on IP Layer, and the RTSP session connection request includes a UDP port number for transmission of the screenshots;
receive both the screenshots and the direction information related to screenshots sent from the mobile terminal by means of IP Layer, including: receive both the screenshots and the direction information related to screenshots sent from the mobile terminal on the UDP port number by means of the RTSP session of IP Layer.

A non-transitory computer-readable storage medium, wherein instructions in the storage medium are executed by the processor of the mobile terminal so that the mobile terminal may execute an image transmission method, and the method includes:
sending IP connection request to the mobile terminal according to the IP address stored in the local mobile terminal;
receiving both the screenshots and the direction information related to screenshots sent from the mobile terminal by means of IP Layer; and
displaying the screenshots according to the direction information.

Instructions in the storage media may also include:
The displaying the screenshots according to the direction information includes: controlling the scale and the size of a window for displaying the screenshots according to the direction information, and displaying the screenshots by the window.

Instructions in the storage media may also include:
The IP connection request is an RTSP session connection request based on IP Layer, and the RTSP session connection request includes a UDP port number for transmission of the screenshots;
The receiving both the screenshots and the direction information related to screenshots sent from the mobile terminal by means of IP Layer includes: receiving both the screenshots and the direction information related to screenshots sent from the mobile terminal on the UDP port number by means of the RTSP session of IP Layer.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings.

## Claims

1. An image transmission method, the method comprising:
a mobile terminal receiving an IP connection request sent from a computer;
the mobile terminal acquiring an IP address of the computer according to the IP connection request received;
the mobile terminal acquiring screenshots and direction information related to the screenshots; and
the mobile terminal sending the screenshots and the direction information to the computer by means of the IP connection according to the IP address received.

2. The image transmission method of claim 1, wherein said acquiring direction information related to screenshots comprises:
the mobile terminal reading the direction information from a locally preset storage location for storing direction information related to screenshots; or
the mobile terminal determining the direction information related to the screenshots according to a length-width ratio of the screenshots; or
the mobile terminal determining the direction information related to the screenshots according to direction information determined by a local direction sensor.

3. The image transmission method of claim 1 or claim 2, wherein the method further comprises: the mobile terminal compressing the screenshots and acquiring the screenshots compressed; and
said sending the screenshots and the direction information to the computer by means of the IP connection comprises: the mobile terminal sending the screenshots compressed and the direction information to the computer by means of the IP connection.

4. The image transmission method of any preceding claim, wherein the IP connection is a Real-time Transport Streaming Protocol,RTSP, session connection, and the RTSP session connection request comprises a UDP port number for transmission of the screenshots;
said sending the screenshots and the direction information to the computer by means of the IP connection according to the IP address received comprises: the mobile terminal sending the screenshots and the direction information to the computer with the IP address and the UDP port number by means of the RTSP session of the IP connection.

5. An image transmission method, the method comprising:
a computer sending an IP connection request to a mobile terminal according to an IP address of a mobile terminal stored locally;
the computer receiving both screenshots and direction information related to the screenshots sent from the mobile terminal by means of the IP connection; and
the computer displaying the screenshots according to the direction information.

6. The image transmission method of claim 5, wherein said displaying the screenshots according to the direction information comprises: the computer controlling a scale and a size of a window for displaying the screenshots according to the direction information, and displaying the screenshots in the window.

7. The image transmission method of claim 5 or claim 6, wherein the IP connection request is an RTSP session connection request based on the IP connection, and the RTSP session connection request comprises a UDP port number for transmission of the screenshots; and
said receiving both the screenshots and the direction information related to the screenshots sent from the mobile terminal by means of the IP connection comprises:
the computer receiving both the screenshots and the direction information related to the screenshots sent from the mobile terminal on the UDP port number by means of the RTSP session of the IP connection.

8. An image transmission device, the device comprising:
a receiving module configured to receive an IP connection request sent from a computer;
an IP module configured to acquire an IP address of the computer according to the IP connection request received;
an acquisition module configured to acquire screenshots and direction information related to the screenshots; and
a sending module configured to send the screenshots and the direction information to the computer by means of the IP connection according to the IP address received.

9. The image transmission device of claim 8, wherein the acquisition module further comprises:
a reading module configured to determine the direction information from a locally preset storage location for storing direction information related to screenshots; or
a scale module configured to determine the direction information related to the screenshots according to a length-width ratio of the screenshots; or
a sensor module configured to determine the direction information related to the screenshots according to direction information determined by a local direction sensor.

10. The image transmission device of claim 8 or claim 9, wherein the device further comprises: a compression module, configured to compress the screenshots and acquire the screenshots compressed; and
the sending module is configured to send the screenshots compressed and the direction information to the computer by means of the IP connection.

11. The image transmission device of any of claims 8 to 10, wherein the IP connection is a Real-time Transport Streaming Protocol, RTSP, session connection, the RTSP session connection request comprises a UDP port number for transmission of the screenshots; and
the sending module is configured to send the screenshots and the direction information to the computer with the IP address and the UDP port number by means of the RTSP session of the IP connection.

12. An image transmission device, the device comprising:
a sending module configured to send an IP connection request to a mobile terminal according to an IP address of a mobile terminal stored locally;
a receiving module configured to receive both screenshots and direction information related to the screenshots sent from the mobile terminal by means of the IP connection; and
a display module configured to display the screenshots according to the direction information.

13. The image transmission device of claim 12, wherein the display module controls a scale and a size of a window for displaying the screenshots according to the direction information, and displays the screenshots in the window.

14. The image transmission device of claim 12 or claim 13, wherein the IP connection is an RTSP session connection, the RTSP session connection request comprises a UDP port number for transmission of the screenshots; and
the receiving module is configured to receive both the screenshots and the direction information related to screenshots sent from the mobile terminal on the UDP port number by means of the RTSP session of the IP connection.

15. A computer program product stored on a computer usable medium, comprising computer-readable program means for causing a processor to implement the method according to any of claims 1 to 7.
